# EUROPEAN PATENT APPLICATION

(11) **EP 4 465 734 A1**
(43) Date of publication of application: **20.11.2024**
(21) Application number: 23173923.6
(22) Date of filing: 17.05.2023
(51) Int. Cl.: H04W 72/40, H04W 72/23, H04W 72/542

(54) **A SYSTEM AND A METHOD FOR PROVIDING CONNECTION WITHIN A 5G NETWORK CELL**

(71) Applicant: Siemens Aktiengesellschaft, 80333 München (DE)
(72) Inventor: Tastan, Mustafa Cihan, 34854 Istanbul (TR)
(74) Representative: Siemens Patent Attorneys

(57) **Abstract**

There is provided a communication method and system to be used in a 5G network cell. The communication method comprises receiving a data transfer request from a first user equipment to a second user equipment by base station, generating a control plane message by the base station for the first user equipment and the second user equipment, wherein the control plane message comprises a synchronization data for determining when to transmit and when to receive data, sending the control plane message to the first user equipment and the second user equipment, providing a direct connection between the first user equipment and the second user equipment, transferring data from the first user equipment to the second user equipment directly, according to synchronization data, and/or transferring data from the second user equipment to the first user equipment directly, according to the synchronization data.

## Description

### Technical Field

Present invention relates to 5G network cells, in particular a method and system for providing connection within a 5G network cell.

### Background of the Invention

5G networks usually comprise plurality of base stations, which can communicate with each other as well as plurality of client devices (i.e. User Equipment). Wireless communication enables the connection between user equipment and a base station, and the area covered by a base station is commonly referred to as a cell.

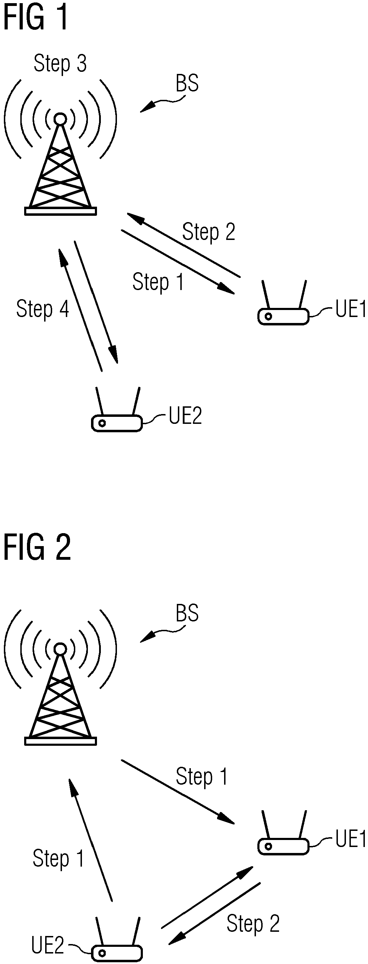

The gNodeB in 5G has authority over user equipment (UE) and connected devices, providing them with control plane (CP) messages that specify when and how data should be received and transmitted. The gNodeB also manages all the connected UEs within the cell. Through the control plane (CP) messages sent by the gNodeB, the UE knows when to receive downlink user plane (UP) data and when to send uplink UP data. This procedure involves a four-step process, as depicted in Figure 1.

Apart from their use in mobile phone networks, 5G networks can be used in industrial applications. Fast and reliable connectivity is essential in industrial systems. Therefore, 5G networks, used in such industrial systems should provide ultra-reliable low latency communication (URLLC) specific improvements take place to provide quality of service (QoS) to improve reliability and service quality of the traffic of the 5G user equipment (UE). However, the capacity of a base station is restricted by its static hardware, which directly impacts the system's overall throughput, end-to-end latency, service capacity, and quality of experience (QoE). The limitations on capacity have an impact on system performance and ultimately, customer satisfaction. Despite the continuous advancements in base station and core network technology, the demand for various types of services is growing at a faster pace than mobile communication technology can keep up with. When amount of data, end-to-end latency constraints and block error rate (BLER) specifications are considered there is a requirement for new techniques which may be solution for new generation communication services.

### Brief Description of the Invention

According to the invention, a communication method and system to be used in a 5G network cell are provided. The communication method comprises the steps of: receiving a data transfer request from at least one first user equipment to at least one second user equipment by base station; generating a control plane message by the base station for the first user equipment and the second user equipment, wherein the control plane message comprises a synchronization data for determining when to transmit and when to receive data; sending the control plane message to the first user equipment and the second user equipment; providing a direct connection between the first user equipment and the second user equipment; transferring data from the first user equipment to the second user equipment directly, according to synchronization data, and/or transferring data from the second user equipment to the first user equipment directly, according to the synchronization data.

The communication system comprises at least one base station; at least one first user equipment and at least one second user equipment, wherein the base station is adapted to receive a data transfer request from the at least one first user equipment to the at least one second user equipment and a control plane message for the first user equipment and the second user equipment, wherein the control plane message comprises a synchronization data for determining when to transmit and when to receive data; the first user equipment is adapted to wirelessly connect to the base station using 5G broadband connection, wirelessly connect to the second user equipment, receive said control plane message from base station, transmit data to and/or receive data from the second user equipment according to synchronization data of received control plane message; the second user equipment is adapted to wirelessly connect to the base station using 5G broadband connection, wirelessly connect to the first user equipment, receive said control plane message from the base station, transmit data to and/or receive data from the first user equipment according to synchronization data of received control plane message.

According to the invention, when a data transfer operation between two user equipment is needed within a 5G network cell, the data transfer is performed by providing a direct connection between the two user equipment. Therefore, it is possible to reduce latency and load of the base station. Furthermore, since the direct data transfer is performed according to a synchronization data of control plane message, generated by the base station, timings of the data transfer is reliably controlled by the base station.

### Object of the Invention

It is an object of the exemplary embodiment of the present invention to provide an efficient system and a method for providing connection within a 5G network cell.

A further object of the present invention is to provide an efficient system and method for reducing the load of a base station.

### Detailed Description of the Invention

Referring to FIG. 2, the communication system of the present invention comprises a base station (BS); a first user equipment (UE1) and a second user equipment (UE2). The base station (BS) is adapted to receive a data transfer request from the first user equipment (UE1) to the second user equipment (UE2). The base station (BS) is adapted to generate a control plane message for the first user equipment (UE1) and the second user equipment (UE2). The control plane message comprises a synchronization data for determining when to transmit and when to receive data. The first user equipment (UE1) is adapted to wirelessly connect to the base station (BS) using 5G (fifth generation) broadband connection. The first user equipment (UE1) is further adapted to wirelessly connect to the second user equipment (UE2), and to receive the control plane message from the base station (BS). The first user equipment (UE1) is adapted to transmit data to and/or receive data from the second user equipment (UE2) according to the synchronization data of the received control plane message.

Likewise, the second user equipment (UE2) is adapted to wirelessly connect to the base station (BS) using 5G (fifth generation) broadband connection. The second user equipment (UE2) is further adapted to wirelessly connect to the first user equipment (UE1), and to receive the control plane message from the base station (BS). The second user equipment (UE2) is adapted to transmit data to and/or receive data from the first user equipment (UE1) according to the synchronization data of the received control plane message.

An exemplary embodiment of the present invention involves utilizing industrial client devices, which are preferably stationary, as the first user equipment (UE1) and second user equipment (UE2). Therefore, it may be possible to provide a steady connection between the first user equipment (UE1) and the second user equipment (UE2). The first user equipment (UE1) and second user equipment (UE2) are both connected to the base station (BS), indicating that they are located within the same cell. In the event that a transfer operation is required between the first user equipment (UE1) and second user equipment (UE2), the data is directly transferred from one user equipment to the other, rather than transmitting the data via the base station (BS). directly. Although the data is not transferred through the base station (BS), the base station (BS) is responsible for synchronizing the first user equipment (UE1) and the second user equipment (UE2) and controlling the data transmit/receive times. Due to this direct connection, the end-to-end latency, which is critical for industrial applications, is minimized. Moreover, as the base station (BS) is not responsible for data transfer, it results in a reduction of load on the base station (BS). Accordingly, 5G network cell is used more efficiently.

In some exemplary embodiments of the present invention, the quality of connection between the first user equipment (UE1) and the second user equipment (UE2) may be ascertained. This is preferably carried out following receiving a data transfer request from the first user equipment (UE1) to the second user equipment (UE2) by the base station (BS). Furthermore, the quality of connection can be evaluated by comparing it to a specific threshold. If the ascertained quality of connection exceeds this threshold, the base station (BS) proceeds to generate a control plane message for both the first and second user equipment. In case the assessed quality of connection falls short of the quality threshold, it results in the prevention of a direct connection between the first user equipment (UE1) and second user equipment (UE2). The quality of connection may comprise various qualitative aspects of communication, such as data transfer speed between the first user equipment (UE1) and the second user equipment (UE2), latency between the first user equipment (UE1) and the second user equipment (UE2), jitter between the first user equipment (UE1) and the second user equipment (UE2). In this embodiment, a direct connection between the first user equipment (UE1) and second user equipment (UE2) may lead to reduced connection quality if the assessed quality falls short of the required quality. Hence, if the connection quality is inadequate, data transfer between the first user equipment (UE1) and second user equipment (UE2) is carried out through the base station to ensure optimal connectivity.

In some exemplary embodiments of the present invention, the synchronization data may be a preconfigured data. In other words, the same synchronization data can be used for providing connection between separate user equipment pairs. While this embodiment helps alleviate the burden on the base station, it may not optimize the connection quality between the first user equipment (UE1) and second user equipment (UE2). Therefore, in an alternative embodiment of the present invention, the synchronization data may be generated adaptively. In an exemplary embodiment of the invention, a scheduling algorithm, e.g. an application using a machine learning, can be used for generating synchronization data adaptively. In such an embodiment, quality of connection between the first user equipment (UE1) and the second user equipment (UE2), data size, data transfer direction i.e. first user equipment to the second user equipment and vice versa, can be used by the scheduling algorithm. The scheduling algorithm may assign resources to the first user equipment (UE1) and the second user equipment (UE2) with and adaptive assignment algorithm. It may divide resource on semi-persistent communication and conventional communication between user equipment pairs and regular communication requirements with the help of machine learning. Therefore, connection between the first user equipment (UE1) and the second user equipment (UE2) can be optimized.

## Claims

1. A communication method, suitable for a 5G network cell, comprising at least one base station (BS) and at least two user equipment (UE1, UE2), comprising the steps of:
a. receiving a data transfer request from at least one first user equipment (UE1) to at least one second user equipment (UE2) by the base station (BS);
b. generating a control plane message by the base station for the first user equipment (UE1) and the second user equipment (UE2), wherein the control plane message comprises a synchronization data for determining when to transmit and when to receive data;
c. sending the control plane message to the first user equipment (UE1) and the second user equipment (UE2);
d. providing a direct connection between the first user equipment (UE1) and the second user equipment (UE2);
e. transferring data from the first user equipment (UE1) to the second user equipment (UE2) directly, according to the synchronization data, and/or transferring data from the second user equipment (UE2) to the first user equipment (UE1) directly, according to the synchronization data.

2. A communication method according to claim 1, following step a, **characterized by** comprising the steps of:
a1. ascertaining the quality of connection between the first user equipment (UE1) and the second user equipment (UE2);
a2. comparing the ascertained quality of connection with a quality threshold;
a3. if the ascertained quality of connection exceeds the quality threshold, continuing to the step b;
a4. if the ascertained quality of connection does not exceed the quality threshold, preventing the direct connection between the first user equipment (UE1) and the second user equipment (UE2).

3. A communication method according to claim 1 or 2, **characterized in that** the synchronization data is a preconfigured data.

4. A communication method according to claim 1 or 2, **characterized in that** in the step b, the synchronization data is generated adaptively.

5. A communication method according to claim 4, **characterized in that** a scheduling algorithm is employed for generating synchronization data adaptively.

6. A communication system, comprising at least one base station (BS); at least one first user equipment (UE1) and at least one second user equipment (UE2), **characterized in that**,
- the base station (BS) is adapted to receive a data transfer request from the at least one first user equipment (UE1) to the at least one second user equipment (UE2) and a control plane message for the first user equipment (UE1) and the second user equipment (UE2), wherein the control plane message comprises a synchronization data for determining when to transmit and when to receive data;
- the first user equipment (UE1) is adapted to wirelessly connect to the base station (BS) using 5G broadband connection, to wirelessly connect to the second user equipment (UE2), to receive the control plane message from the base station (BS), to transmit data to and/or receive data from the second user equipment (UE2) according to synchronization data of the received control plane message;
- the second user equipment (UE2) is adapted to wirelessly connect to the base station (BS) using 5G broadband connection, to wirelessly connect to the first user equipment (UE1), to receive the control plane message from the base station (BS), to transmit data to and/or receive data from the first user equipment (UE1) according to synchronization data of the received control plane message.

7. A communication system according to claim 6, **characterized in that** the first user equipment (UE1) and/or the second user equipment (UE2) are industrial client devices.

8. A communication system according to claim 6 or 7, **characterized in that** the first user equipment (UE1) and/or the second user equipment (UE2) are stationary devices.
